# EUROPÄISCHE PATENTANMELDUNG

(11) **EP 4 672 435 A1**
(43) Veröffentlichungstag der Anmeldung: **31.12.2025**
(21) Anmeldenummer: 25166234.2
(22) Anmeldetag: 26.03.2025
(51) Int. Cl.: H01M 50/103, H01M 50/342

(54) **ZELLGEHÄUSE ZUR AUFNAHME EINES BATTERIEZELLKÖRPERS**

(30) Priorität: 24.06.2024 DE 102024117730
(71) Anmelder: HOERBIGER Antriebstechnik Holding GmbH, 86956 Schongau (DE)
(72) Erfinder: Reumüller, Christian, 86956 Schongau (DE); Kurth, Manfred, 86956 Schongau (DE); Greif, Lukas, 86956 Schongau (DE); Sedlmair, Martin, 86956 Schongau (DE)
(74) Vertreter: Prinz & Partner mbB

(57) **Zusammenfassung**

Ein Zellgehäuse (10) zur Aufnahme eines Batteriezellkörpers, mit einer geschlossenen umlaufenden, rahmenartigen Umfangswand (12) aus einem Flachmaterial. Die Umfangswand (12) ist einstückig ausgebildet und weist einen Überlappungsabschnitt (22) auf, in dem sich ein Anfangsabschnitt (24) der Umfangswand (12) und ein Endabschnitt (26) der Umfangswand (12) überlappen und aneinander befestigt sind. Der Überlappungsabschnitt (22) weist eine Berstvorrichtung (30) mit einer Berstmembran (32) auf, wobei die Berstmembran (32) eine konvexe Seite (42) und eine konkave Seite (40) hat.

## Beschreibung

Die Erfindung betrifft ein Zellgehäuse für einen Batteriezellkörper, welches Seitenwände und eine an einer der Seitenwände angeordneten Berstvorrichtung aufweist.

Batteriezellen, auch Akkumulatorzellen genannt, dienen der chemischen Speicherung von elektrischer Energie. Eine der bekanntesten Batteriezellen ist dabei die Lithium-Ionen-Batteriezelle.

Typischerweise umfasst eine Batteriezelle mindestens einen Batteriezellkörper in Form eines Elektrodenwickels oder eines Elektrodenstapels, der wiederum aus mindestens einer positiven Elektrode, mindestens einer negativen Elektrode und mindestens einem zwischen der positiven und der negativen Elektrode angeordneten Separator gebildet ist. Der Batteriezellkörper kann zusätzlich noch eine Isolatorfolie aufweisen, die um den Elektrodenwickel oder Elektrodenstapel gewickelt ist. Zur Ausbildung einer Batteriezelle wird der Batteriezellkörper in ein Zellgehäuse eingesetzt. Je nach Bauform des Zellgehäuses ist die Batteriezelle in Form einer Rundzelle, einer Pouch-Zelle oder einer prismatischen Zelle ausgeführt.

Bei Lithium-Ionen-Batterien kann es in bestimmten Situationen, wie einem Defekt oder einer unsachgemäßen Handhabung, zur Gasbildung und zu einem daraus resultierenden Überdruck innerhalb der Batteriezelle kommen. Es ist daher bekannt, ein Überdruckventil oder eine Berstmembran im Zellgehäuse des Batteriezellkörpers vorzusehen, um die entstandenen Gase gezielt in eine Richtung abzuführen. Die Berstmembran ist dabei so ausgestaltet, dass sie ab einem bestimmten Druck im Inneren des Zellgehäuses zerbirst.

Das Zellgehäuse prismatischer Zellen wird üblicherweise aus Aluminium oder einem Material mit einer Aluminiumlegierung hergestellt, und die Berstmembran ist direkt in das Aluminium-Zellgehäuse eingebracht oder stoffschlüssig mit dem Zellgehäuse verbunden. Die Berstmembran ist daher ebenfalls aus Aluminium oder einem Material mit einer Aluminiumlegierung. Berstmembranen aus Aluminiumwerkstoffen haben üblicherweise eine auf Zug- oder Scherung belastete Sollbruchstelle, die beim Erreichen der Zugfestigkeit des Aluminiumwerkstoffes kontrolliert versagt, sodass die Berstmembran kontrolliert zerbirst und einen Druckausgleich zwischen dem Inneren und dem Äußeren der Batteriezelle stattfinden kann.

Alternativ kann ein Zellgehäuse einer prismatischen Batteriezelle auch aus einem Eisenwerkstoff, also Eisen oder einem Material mit einer Eisenlegierung, hergestellt werden. Wird dann die Berstmembran in das Zellgehäuse eingebracht, besteht sie, wie das Zellgehäuse auch, aus Eisen oder einem Material mit einer Eisenlegierung. Eisenwerkstoffe weisen jedoch eine deutlich höhere Zugfestigkeit auf als Aluminium, sodass eine Berstmembran aus Eisen oder mit einer Eisenlegierung ebenfalls eine deutlich höhere Zugfestigkeit aufweist als eine vergleichbare Berstmembran aus Aluminium oder einem Material mit einer Aluminiumlegierung. Folglich zerbirst eine Berstmembran aus Eisen nur schwer und insbesondere nicht so schnell und zuverlässig wie eine vergleichbare Berstmembran aus Aluminium. Eine Berstmembran, die in ein Zellgehäuse aus Eisen oder einem Material mit einer Eisenlegierung direkt eingebracht bzw. integriert ist, also einstückig mit diesem ausgebildet ist, lässt sich auf Grund der Eigenschaften von Eisen nur schwer technisch und wirtschaftlich umsetzen. Daher werden in Zellgehäusen aus Eisenwerkstoffen typischerweise Berstmembranen als separate Bauteile in das Zellgehäuse eingesetzt.

Aufgabe der vorliegenden Erfindung ist es, ein Zellgehäuse mit einer Berstvorrichtung bereitzustellen, das die aus dem Stand der Technik bekannten Nachteile überwindet und ein zuverlässiges Bersten der Berstmembran sicherstellt.

Die Aufgabe wird erfindungsgemäß gelöst durch ein Zellgehäuse zur Aufnahme eines Batteriezellkörpers, mit einer geschlossenen umlaufenden, rahmenartigen Umfangswand aus einem Flachmaterial. Die Umfangswand ist einstückig ausgebildet und weist einen Überlappungsabschnitt auf, in dem sich ein Anfangsabschnitt der Umfangswand und ein Endabschnitt der Umfangswand überlappen und aneinander befestigt sind. Der Überlappungsabschnitt weist eine Berstvorrichtung mit einer Berstmembran auf, wobei die Berstmembran eine konvexe Seite und eine konkave Seite hat.

Der Grundgedanke der Erfindung ist, bei einem Zellgehäuse aus Eisen oder einem Material mit einer Eisenlegierung die Berstmembran strukturell so auszugestalten, indem die Berstmembran eine konvexe und eine konkave Seite aufweist, dass sie einstückig mit dem Zellgehäuse ausgebildet werden kann, sie also ebenfalls aus Eisen oder einem Material mit einer Eisenlegierung besteht, und dennoch zuverlässig bei einem Öffnungsdruck zwischen 2 und 30 bar zerbirst. Die erfindungsgemäße Berstmembran zerbirst nicht auf Grund einer durch Zug oder Scherung belasteten Sollbruchstelle, wie es bei einer Berstmembran aus Aluminium möglich ist, sondern durch Stabilitätsversagen der Berstmembran selbst. Eine Sollbruchstelle in der Berstmembran ist dabei nicht zwingend notwendig.

Das Zellgehäuse selbst wird dazu durch ein Biege-, Press-, Schweiß- oder Rollumformungsverfahren aus einem Flachmaterial aus Eisen oder einem Material mit einer Eisenlegierung hergestellt. Die Wandstärke des Flachmaterials, das die Umfangswand bildet, weist eine Stärke zwischen 0,2 mm und 3 mm auf. Durch das Umformen wird die Wandstärke nicht verändert, sodass das Zellgehäuse ebenfalls eine konstante Wandstärke von 0,2 mm bis 3 mm aufweist, mit Ausnahme des Überlappungsabschnitts, in dem der Anfangsabschnitt und der Endabschnitt der Umfangswand überlappen. Durch das Einführen dieses Überlappungsabschnitts kommt es also zu einer Versteifung des Zellgehäuses genau an der Seitenwand, in der sich die Berstvorrichtung befindet. Der Überlappungsabschnitt gibt dem Zellgehäuse dabei eine ausreichende Stabilität, ohne dass die gesamte Wandstärke des Zellgehäuses erhöht werden muss. Dadurch kann bei der Herstellung des Zellgehäuses Material eingespart werden, und das Zellgehäuse ist trotz der Berstvorrichtung auch nach einem Berstfall ausreichend stabil.

Der Anfangsabschnitt ist dabei der Abschnitt, der mit einer Seite zum Inneren des Zellgehäuses zeigt und mit der anderen Seite zumindest teilweise an dem Endabschnitt anliegt. Der Endabschnitt hingegen liegt mit einer Seite an dem Anfangsabschnitt an und die gegenüberliegende Seite zeigt zum Äußeren des Zellgehäuses. In einer Querschnittsansicht liegt der Anfangsabschnitt daher unterhalb des Endabschnitts.

Die im Überlappungsabschnitt aufeinanderliegenden Anfangsabschnitte und Endabschnitte sind erfindungsgemäß stoffschlüssig miteinander verbunden. Besonders dazu geeignet sind Fügeverfahren, wie Laserschweißen, Rührreibschweißen oder Lötverfahren. Die beiden Abschnitte können entweder durch Durchschweißung von einer an dem Abschnitt anliegenden Seite des Zellgehäuses oder über eine Kehlnaht aneinander befestigt werden. Durch die doppelte oder mehrfache Wand im Bereich der Berstvorrichtung wird das Zellgehäuse dort besonders effektiv versteift.

Erfindungsgemäß ist die Berstmembran einstückig mit dem Anfangsabschnitt, der mit einer Seite zum Inneren des Zellgehäuses zeigt, ausgebildet. Die Berstmembran kann also direkt aus dem Anfangsabschnitt ausgeformt werden, sodass ein Einfügen einer separat ausgebildeten Berstmembran entfällt. Damit kann eine Verbindungsstelle zwischen der separat ausgebildeten Berstmembran und dem Zellgehäuse verhindert werden, die die Stabilität des Zellgehäuses schwächt und im schlimmsten Fall eine ungewollte Sollbruchstelle darstellt. Vielmehr ist die Berstmembran Teil des Anfangsabschnitts des Zellgehäuses und damit Teil einer Seitenwand des Zellgehäuses. Darüber hinaus entfällt durch das einstückige Ausbilden der Berstmembran mit dem Anfangsabschnitt ein Arbeitsschritt bei der Herstellung des Zellgehäuses, und die Anzahl der separat ausgebildeten Teile wird reduziert. Beides führt zu einer Zeit- und Kostenersparnis bei der Herstellung des Zellgehäuses.

Gemäß einem Aspekt der Erfindung zeigt die konvexe Seite der Berstmembran in Richtung des Inneren des Zellgehäuses. Mit anderen Worten ist ein Teil eines Anfangsabschnitts des Zellgehäuses in Richtung des Inneren des Zellgehäuses gedrückt, um die Berstmembran auszubilden. Diese so hergestellte Berstmembran stellt dabei ein Umkehrberstelement dar, deren Bersten darauf basiert, dass bei einem erhöhten Druck im Inneren des Zellgehäuses die Berstmembran aufgrund von Stabilitätsversagen zerbirst. Sobald im Inneren des Zellgehäuses der Druck auf einen Öffnungsdruck von 2 bis 30 bar ansteigt, wird die Berstmembran so lange in Richtung des Äußeren des Zellgehäuses gedrückt, bis sie zerbirst.

Um das Zerbärsten der Berstmembran zu verbessern, kann die Berstmembran gemäß einem weiteren Aspekt der Erfindung eine Schwächungszone aufweisen, die in das Material der Umfangswand beispielsweise durch Prägen, Laserabtragen oder spanend, eingebracht wird und die Berstmembran zusätzlich schwächt. In einem Berstfall zerbirst die Berstmembran und damit ein Teil der Umfangswand dann genau an der Schwächungszone, sodass das im Inneren des Zellgehäuses entstandene Gas gezielt entweichen kann.

Erfindungsgemäß kann diese Schwächungszone eine Vertiefung sein, die sich über die gesamte Länge der Berstmembran erstreckt und parallel oder schief zu einer Biegekante des Zellgehäuses verläuft. Der Verlauf der Schwächungszone ist dabei von mehreren Faktoren abhängig. Zum einen ist entscheidend, wie groß die Schwächungszone insgesamt sein muss, um in einem Berstfall eine Öffnung bereitzustellen, die ausreichend groß ist, um den im Zellgehäuse entstandenen Druck schnellstmöglich abzuführen. Zum anderen ist der Verlauf der Schwächungszone auch von der Größe der Berstmembran und des Zellgehäuses abhängig.

Die Schwächungszone der Berstmembran kann eine bezogen auf das Zellgehäuse innenseitige und/oder außenseitige Vertiefung sein. Insbesondere weist die Vertiefung einen keil- oder trapezförmigen Querschnitt mit wahlweise Verrundungen auf. Es ist auch möglich, dass die Schwächungszone beidseitig ausgeführt ist.

Der Endabschnitt, der mit einer Seite zum Äußeren des Zellgehäuses zeigt, kann im Bereich der Berstvorrichtung eine Öffnung aufweisen. Die Öffnungsfläche der Berstmembran beträgt 20 bis 5.000 mm², sodass die Öffnung des Endabschnitts mindestens 20 bis 5.000 mm² groß sein muss. Über die Öffnung gelangen die im Inneren des Zellgehäuses entstandenen Gase nach außen. Entlang der Öffnung und damit im Bereich der Berstvorrichtung stützt sich der Anfangsabschnitt an dem Endabschnitt ab. Daher ist es vorteilhaft, wenn die Öffnung sich nicht bis zu den Biegekanten des Endabschnitts erstreckt, sondern ein zumindest kleiner Abschnitt des Endabschnitts weiterhin der Abstützung des Anfangsabschnitts dienen kann.

Darüber hinaus kann die Berstvorrichtung im Endabschnitt ein Versteifungselement aufweisen, das einstückig mit dem Endabschnitt ausgebildet ist. Das Versteifungselement dient der Versteifung der Berstvorrichtung im Endabschnitt und stabilisiert vor allem bei einer großen Öffnung den Endabschnitt und damit das gesamte Zellgehäuse

Gemäß einem weiteren Aspekt der Erfindung weist das Versteifungselement eine Bersthilfe mit einer Schneidgeometrie auf, die der Berstmembran zugeordnet ist. Die Schneidgeometrie der Bersthilfe kann eine Schneidkante, eine Schneidfläche und/oder eine Spitze sein. Die Schneidgeometrie ist integral aus dem Versteifungselement gebildet, ist also einstückig aus dem Versteifungselement hergestellt. Insbesondere ist die Schneidgeometrie eine Schneidkante, die einen dreieckigen Querschnitt aufweist. Die Schneidgeometrie ist dabei so angeordnet, dass die Berstmembran in einem Berstfall gegebenenfalls in Kontakt mit der Schneidgeometrie der Bersthilfe gelangt, falls die Berstmembran nicht bereits zerborsten ist. Dazu ist die Schneidgeometrie vorheilhafterweise parallel nach oben versetzt zu der Schwächungszone der Berstmembran positioniert. Spätestens bei der Berührung der Schneidgeometrie wird ein Zerbersten der Berstmembran herbeigeführt. Vorteilhafterweise ist die Schneidgeometrie der einzige Teil der Bersthilfe, der mit dem die Berstmembran in Kontakt kommt.

Das Versteifungselement kann ein Steg sein, der die Öffnung überspannt und von der Berstmembran beabstandet ist. Der Steg unterteilt dabei die Öffnung in zwei kleinere insbesondere gleich große Öffnungen, sodass die Berstvorrichtung insgesamt stabilisiert wird. Der Steg halbiert damit vorzugsweise die Öffnung. Darüber hinaus dient der Steg der Bereitstellung der Bersthilfe und ist so positioniert, dass die Bersthilfe vorzugsweise mittig zur Berstmembran verläuft und direkt oberhalb der Schwächungszone angeordnet ist. Da der Steg die gesamte Öffnung überspannt, kann grundsätzlich jedoch über die gesamte Länge des Stegs die Bersthilfe bereitgestellt werden. Wichtig ist jedoch, dass die Berstmembran im Normalzustand nicht zur Anlage an dem Steg kommt.

In einem Berstfall weist die Berstmembran eine Öffnungsfläche von 20 bis 5.000 mm² auf. Der Öffnungsdruck, also der Druck, der im Inneren des Zellgehäuses herrschen muss, damit es zu einem Zerbersten der Berstmembran kommt, liegt zwischen 2 und 30 bar. Die Größe der Öffnungsfläche ist abhängig von der Größe der Berstmembran. Der Öffnungsdruck kann beispielsweise über die Art und Abmessung der Schwächungszone der Berstmembran oder über die den Grad der Konvexität der Berstmembran angepasst werden.

Das Zellgehäuse kann stirnseitig durch einen mit der Umfangswand gekoppelten Boden und einen gegenüberliegenden Deckel geschlossen werden. Die Verbindung zwischen Boden beziehungsweise Deckel und Zellgehäuse ist dabei stoffschlüssig, sodass weder die in das Zellgehäuse eingefüllte Elektrolytlösung durch die Schweißnaht ausdringen noch andere Substanzen über die Schweißnaht in die Batteriezelle eindringen können.

Sowohl der Boden als auch der Deckel können die beiden für eine Batterie benötigten Pole aufweisen. Dabei kann entweder der Deckel beide Pole aufweisen oder ein Pol ist im Deckel und ein zweiter Pol ist im Boden angeordnet.

Das erfindungsgemäße Zellgehäuse kann über das folgende fünfstufige Verfahren hergestellt werden.

In einem ersten Schritt wird eine flache Platte aus Flachmaterial bereitgestellt. Die Platte kann dabei aus jedem beliebigen Metallwerkstoff bestehen, insbesondere ist sie jedoch aus Eisen oder einem Material mit einer Eisenlegierung.

In einem zweiten Schritt wird der erste Teil der Berstvorrichtung ausgebildet. Dazu wird im Endabschnitt der Umfangswand die Öffnung eingebracht, wobei das Versteifungselement einstückig mit dem Endabschnitt ausgebildet wird, sodass es die Öffnung teilt und vorzugsweise halbiert. An dem Versteifungselement wird zusätzlich die Bersthilfe ausgebildet und aus diesem geformt.

In einem dritten Schritt wird der zweite Teil der Berstvorrichtung ausgebildet. Dabei wird die Berstmembran aus dem Anfangsabschnitt der Umfangswand geformt. Dabei ist es vorteilhaft, wenn die Berstmembran im zusammengebauten Zustand des Zellgehäuses vollständig innerhalb der Öffnung liegt, also nicht größer ist, als die Öffnung. Die Berstmembran wird dabei so in den Anfangsabschnitt der Umfangswand eingebracht, dass die konvexe Seite der Berstmembran in Richtung des späteren Inneren des Zellgehäuses zeigt. Die konkave Seite zeigt entsprechend in Richtung des Endabschnitts und des Äußeren des Zellgehäuses.

Selbstverständlich kann auch zuerst die Berstmembran ausgeformt werden und in einem dritten Schritt die Öffnung und das Versteifungselement ausgebildet werden.

In einem vierten Schritt wird die Platte zu der geschlossenen umlaufenden, rahmenartigen Umfangswand umgeformt. Die Platte wird dazu an mindestens vier Stellen umgeformt, sodass mindestens vier Biegekanten entstehen. Die Biegekanten weisen einen Biegeradius von 0,1 mm bis 10 mm bei einem Biegewinkel von 90° auf. Nach dem Biegen überlappen sich zumindest teilweise der Anfangsabschnitt und der Endabschnitt der Umfangswand und bilden gemeinsam den Überlappungsabschnitt mit der Berstvorrichtung. Die Wandstärke im Überlappungsabschnitt, mit Ausnahme der Berstvorrichtung, ist daher doppelt so groß wie die Wandstärke des restlichen Zellgehäuses. Das Gehäuse kann entweder gebogen, rollumgeformt, fließgepresst oder stapelgepresst werden. Insbesondere wird es allerdings gebogen oder als Endlosrohr durch Rollumformen hergestellt.

In einem fünften Schritt werden der Anfangsabschnitt und der Endabschnitt im Überlappungsabschnitt zumindest teilweise miteinander stoffschlüssig durch ein Fügeverfahren verbunden. Mögliche Fügeverfahren sind Laserschweißen oder Rührreibschweißen, sodass eine Kehlnaht entsteht. Überlappen der Anfangsabschnitt und der Endabschnitt so weit, dass einer der beiden Abschnitte eine zweite Seitenwand kontaktiert, so kann dieser Abschnitt mittels Durchschweißung an der anliegenden Gehäuseseite befestigt werden. Die Verbindung kann auch vollflächig im gesamten Überlappungsabschnitt erfolgen, so zum Beispiel durch Löten.

Um eine fertige Batteriezelle herzustellen, wird nach dem Herstellen des Zellgehäuses der Batteriezellkörper in das Zellgehäuse eingesetzt. Ein Boden und ein Deckel werden beispielsweise durch Laser- oder Ultraschallschweißen an der Umgangswand befestigt, sodass ein geschlossenes Zellgehäuse entsteht. Anschließend wird eine Elektrolytlösung eingeleitet.

Weitere Merkmale und Vorteile der Erfindung ergeben sich aus der folgenden Beschreibung und aus den beigefügten Zeichnungen, auf die Bezug genommen wird. In den Zeichnungen zeigen:
- Figur 1 eine isometrische Ansicht erfindungsgemäßes Zellgehäuse mit einer Berstvorrichtung;
- Figur 2 eine Draufsicht der Berstvorrichtung aus Figur 1;
- Figur 3 eine Querschnittsansicht der Berstvorrichtung aus Figur 1; und
- Figuren 4a und 4b eine Querschnittsansicht eines erfindungsgemäßen Zellgehäuses.

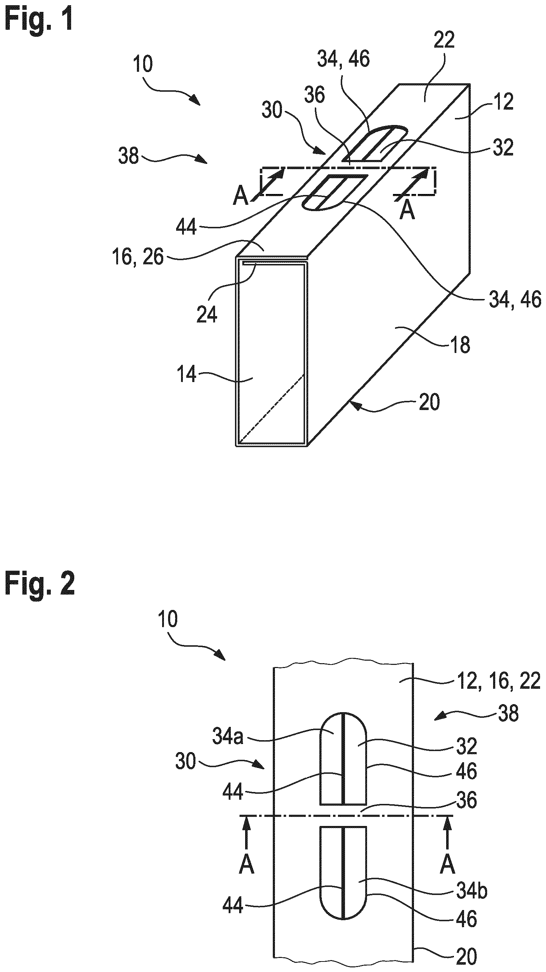

Figur 1 zeigt ein Zellgehäuse 10 für einen Batteriezellkörper, das als prismatisches Zellgehäuse ausgebildet ist.

Das Zellgehäuse 10, genauer gesagt die gezeigte Umfangswand 12 des Zellgehäuses 10, ist aus einem umgeformten Flachmaterial gebildet. Als Flachmaterial können grundsätzlich alle gängigen Metallwerkstoffe verwendet werden, beispielsweise Eisen oder ein Material mit einer Eisenlegierung.

Die Umfangswand 12 ist einstückig aus dem Flachmaterial durch Umformen, insbesondere Umbiegen oder Rollumformen hergestellt ist.

Die Umfangswand ist umfangsmäßig geschlossen und rahmenartig ausgebildet, sodass sie ein Inneres 14 des Zellgehäuses 10 umschließen. Im Inneren 14 kann zu einem späteren Zeitpunkt ein Batteriezellkörper eingesetzt werden.

Das Zellgehäuse 10 weist einen rechteckigen Querschnitt mit zwei kurzen, gegenüberliegenden Seiten 16 und zwei langen gegenüberliegenden Seiten 18 auf, die jeweils parallel zueinander verlaufen. Die beiden Seiten 16, 18 können jede beliebige Länge aufweisen, solange die beiden kurzen Seiten 16 und die beiden langen Seiten 18 jeweils im Wesentlichen gleichlang sind, sodass ein prismatisches Zellgehäuse 10 entsteht.

Zwischen zwei angrenzenden Seiten 16, 18 befindet sich eine Biegekante 20 mit einem Biegeradius r, der zwischen 0,2 mm und 10 mm liegt. Die Biegekante 20 ist, um unnötig starke Materialbeanspruchung zu verhindern, keine spitze Kante, sondern eine stumpfe Kante.

Die kurzen Seiten 16 und die angrenzenden langen Seiten 18 schließen bei einem rechteckigen Querschnitt einen Biegewinkel α von im Wesentlichen 90° ein.

Teile der Umfangswand 12 überlappen an einer der beiden kurzen Seiten 16 und bilden einen Bereich, in dem die Umfangswand 12 einseitig verstärkt ist. Dieser Bereich stellt einen Überlappungsabschnitt 22 dar.

Der Überlappungsabschnitt 22 wird genau genommen aus einem Anfangsabschnitt 24 und einem Endabschnitt 26 der Umfangswand 12 gebildet.

Der Anfangsabschnitt 24 ist dabei auf der dem Inneren 14 zugewandten Seite des Zellgehäuses 10 angeordnet und bildet die Innenlage und der Endabschnitt befindet sich auf der dem Inneren 14 angewandten Seite des Zellgehäuses 10 und bildet die Außenlage des Zellgehäuses 10.

Der gesamte Überlappungsabschnitt 22 macht dabei mehr als 90% der Fläche der kurzen Seite 16 aus. Damit ist nahezu die gesamte kurze Seite 16 durch den Überlappungsabschnitt 22 versteift.

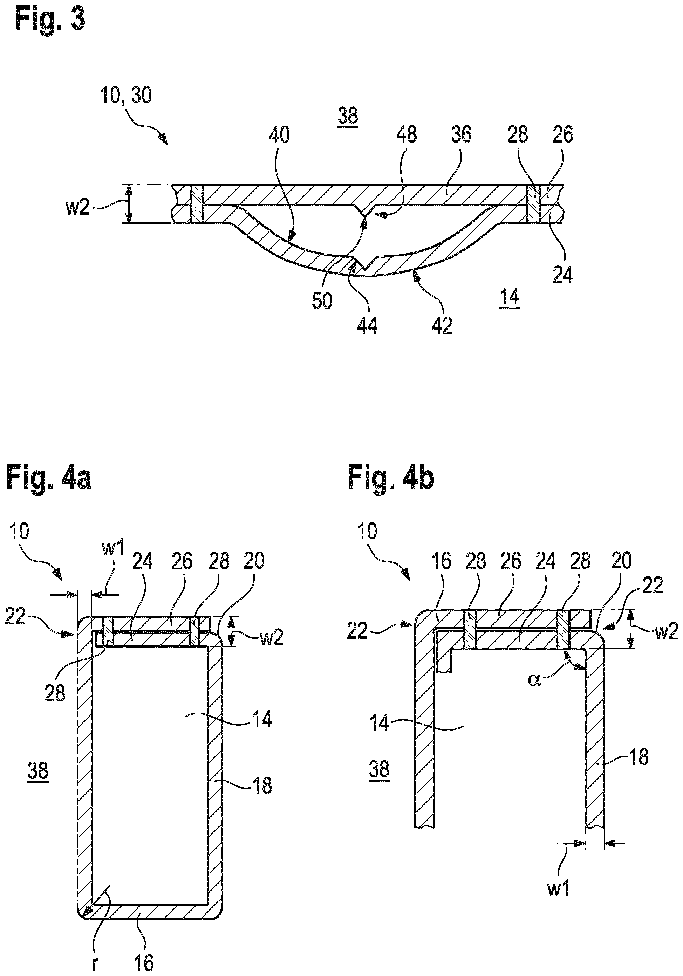

Bei dem Zellgehäuse 10, das in Figur 4b dargestellt ist, reicht der Anfangsabschnitt 24 sogar über die kurze Seite 16 hinaus und kontaktiert die angrenzende lange Seite 18.

Um dem Zellgehäuse 10 die nötige Stabilität zu geben, sind der Anfangsabschnitt 24 und der Endabschnitt 26 stoffschlüssig an mindestens zwei Befestigungsstellen 28 miteinander verbunden. Dazu werden die beiden Abschnitte 24 und 26 beispielsweise lasergeschweißt oder rührreibgeschweißt. Die dabei entstehende Schweißnaht ist z.B. als Kehlnaht ausgebildet. Ist der Anfangsabschnitt 24 länger als die kurze Seite 16 oder die lange Seite 18 und kontaktiert die angrenzende Seite 16, 18, so kann der Anfangsabschnitt 26 auch an einer kurzen Seite 16 beziehungsweise langen Seite 18 beispielsweise durch Durchgangsschweißen befestigt werden, wie in der Figur 4b gezeigt ist.

Die Umfangswand 12 ist aus einem Flachmaterial gebildet, das eine konstante Wandstärke w1 aufweist. Da die Umfangswand einstückig aus dem Flachmaterial gebildet ist, weist auch das Zellgehäuse 10 in den meisten Bereichen die konstante Wandstärke w1 auf. Nur im Überlappungsabschnitt 22 weist das Zellgehäuse 10 eine andere Wandstärke w2 auf. Durch das Überlappen des Anfangsabschnitts 24 und des Endabschnitts 26 des Zellgehäuses ist die Wandstärke w2 im Überlappungsabschnitt 22 doppelt so groß wie die Wandstärke w1. Dies führt zu einer einseitigen Verstärkung und Versteifung des Zellgehäuses 10.

Diese Versteifung wird benötigt, da aus Sicherheitsgründen im Überlappungsabschnitt 22 des Zellgehäuses 10 eine Berstvorrichtung 30 vorgesehen ist.

Die Berstvorrichtung 30 ist in einer der beiden kurzen Seiten 16 eingebracht und weist eine Berstmembran 32 und eine Öffnung 34 auf, über die sich ein Versteifungselement 36 spannt.

Die Berstmembran 32 ist dazu eingerichtet, in einem Berstfall zu bersten und einen Druckausgleich zwischen dem Inneren 14 und einem Äußeren 38 des Zellgehäuses 10 zu ermöglichen.

Die Berstmembran 32 ist einstückig mit dem Anfangsabschnitt 24 der Umfangswand 12 ausgebildet und stellt damit einen Teil der Umfangswand 12 des Zellgehäuses 10 dar. Genau genommen wird die Berstmembran 32 aus dem Anfangsabschnitt 24 ausgeformt, sodass sie eine gekrümmte Struktur mit einer konkaven Seite 40 und einer konvexen Seite 42 aufweist.

Die konkave Seite 40 ist in Richtung des Äußeren 38 des Zellgehäuses 10 gerichtet und die konvexe Seite 42 zeigt in Richtung des Inneren 14 des Zellgehäuses 10.

Durch diese geometrische Ausgestaltung der Berstmembran 32 ist ein Bersten der Berstmembran 32 bei einem Öffnungsdruck zwischen 2 und 30 bar auch dann möglich, wenn die Berstmembran 32 aus Eisen oder einem Material mit einer Eisenlegierung gebildet ist. Das Bersten der Berstmembran 32 basiert auf dem Prinzip des Stabilitätsversagens, da die Berstmembran 32 auf Grund von Stabilitätsversagen zerbirst. Aus diesem Grund stellt die Berstmembran 32 ein Umkehrberstelement dar. In einem Berstfall weist das Zellgehäuse 10 eine Öffnungsfläche zwischen 20 und 5.000 mm² auf, abhängig davon, wie groß die Berstmembran 32 ist.

Die Berstmembran 32 weist zusätzlich eine Schwächungszone 44 auf, die die Art Sollbruchstelle der Berstmembran 32 darstellt.

Diese Schwächungszone 44 vereinfacht das Bersten der Berstmembran 32, wenn der Öffnungsdruck im Inneren 14 des Zellgehäuses 10 anliegt. Die Öffnungsfläche der Berstmembran 32 lässt sich zusätzlich durch die Ausgestaltung und Größe der Schwächungszone 44 beeinflussen.

Wie besonders gut in Figur 2 zu erkennen ist, ist die Schwächungszone 44 als Einkerbung ausgeführt, die einen keilförmigen Querschnitt aufweist. Die Schwächungszone 44 befindet sich in der Berstmembran 32 und damit in dem Anfangsabschnitt 24 der Umfangswand 12 und ist auf der dem Inneren 14 abgewandten Seite des Endabschnitts 26.

Selbstverständlich kann die Schwächungszone 44 auch auf der dem Inneren 14 zugewandten Seite des Endabschnitts 26 angeordnet sein. Es sind auch zwei Schwächungszonen 44 möglich, wobei eine Schwächungszone 44 auf der dem Inneren 14 abgewandten Seite und die zweite Schwächungszone 44 auf der dem Inneren 14 zugewandten Seite des Endabschnitts 26 angeordnet sein können.

Der Endabschnitt 26, weist als Gegenstück zur Berstmembran 32 eine der Berstmembran 32 gegenüberliegende Öffnung 34 auf, sodass alles zusammen die Berstvorrichtung 30 darstellt.

Die Öffnung 34 ist dabei so geformt, dass die Berstmembran 32 aus einer Draufsicht betrachtet, vollständig innerhalb der Öffnung 34 liegt, sodass die Öffnung 34 die Berstmembran 32 vollständig umschließt.

Wie in den Figuren 1 und 2 gezeigt ist, weist die Öffnung 34 einen ovalförmigen Außenrand 46 aus zwei Kreisbögen und zwei Geraden auf. Der Außenrand 46 der Öffnung 34 kann jedoch jede beliebige geometrische Form aufweisen, solange er die Berstmembran 32 vollständig umschließt.

Die Öffnung ist 34 seitlich allseitig von den Biegekanten 20 der Umfangswand 12 entfernt. Die Öffnung 34 ist somit vollkommen von dem Endabschnitt 26 und damit von der Umfangswand 12 umschlossen.

Der gesamte Außenrand 46 der Öffnung 34 und der übrige Teil des Endabschnitts 26 kontaktieren den darunterliegenden Anfangsabschnitt 24 der Umfangswand 12, wobei beide Abschnitte 24, 26 gemeinsam die Berstvorrichtung 30 ausbilden. Der Anfangsabschnitt 24 und der Endabschnitt 26 stützen sich in den Randbereichen der Berstvorrichtung 30 aneinander ab, um die Stabilität des Zellgehäuses 10 trotz der Berstvorrichtung 30 zu gewährleisten.

Als zusätzliche Stabilisierung vor allem des Endabschnitts 26 erstreckt sich über der Öffnung 34 des Endabschnitts 26 das einstückig mit dem Endabschnitt 26 ausgebildete Versteifungselement 36.

Das Versteifungselement 36 ist als eine Art Steg ausgebildet.

Wie in Figur 3 zu erkennen ist, kann das Versteifungselement 36 in einer Ebene mit dem Endabschnitt 26 angeordnet sein, es steht also weder in Richtung des Inneren 14 noch in Richtung des Äußeren 38 über. Darüber hinaus ist das Versteifungselement 36 von der Berstmembran 32 beabstandet, sodass die Berstmembran 32 im Normalzustand, bei einem normalen Druck innerhalb des Zellgehäuses 10 nicht zur Anlage an dem Versteifungselement 36 kommt.

Dies ist vor allem wichtig, um einerseits die Funktion der Berstmembran 32 als Umkehrberstelement zu erhalten und andererseits, da das Versteifungselement 36 eine Bersthilfe 48 mit einer Schneidgeometrie bereitstellt.

Die Bersthilfe 48 dient dazu, die Berstmembran 32 in einem Berstfall, falls sie nicht bereits zerborsten ist, zum Bersten zu bringen. Die Bersthilfe 48 muss die Berstmembran 32 daher strukturell so schwächen können, dass die Berstmembran 32 zumindest an einer Stelle kaputt geht, um einen Gasaustausch zwischen dem Inneren 14 und dem Äußeren 38 des Zellgehäuses 10 zu ermöglichen.

Die Bersthilfe 48 befindet sich im Wesentlichen mittig an dem Versteifungselement 36 und weist einen keilförmigen Querschnitt auf, der der Berstmembran 32 zugeordnet ist.

Um ein zuverlässiges Bersten der Berstmembran 32 sicherzustellen, weist die Bersthilfe 48 eine Schneidgeometrie 50 auf, die der Berstmembran 32 zugeordnet ist und an der die Berstmembran 32 in einem Berstfall gegebenenfalls zum Anliegen kommt.

Die an der Bersthilfe 48 angeordnete Schneidgeometrie 50 kann grundsätzlich eine Schneidkante, eine Schneidfläche und/oder eine Spitze sein.

Wie besonders gut in Figur 3 gezeigt ist, ist die Schneidgeometrie 50 eine Schneidkante, die aus einer durch das Versteifungselement 36 gebildeten Ebene in Richtung der Berstmembran 32 hervorsteht, sie ist also der Berstmembran 32 zugewandt und zugeordnet. Die Schneidgeometrie 50 befindet sich vorzugsweise direkt oberhalb der Schwächungszone 44 der Berstmembran 32 und verläuft nach oben versetzt parallel zu dieser. Damit verläuft die Schneidgeometrie 50 und auch die Bersthilfe 48 parallel zu den Biegekanten 20 des Zellgehäuses 10 und senkrecht zu dem Versteifungselement 36.

Die Bersthilfe 48 mit der Schneidgeometrie 50 ist einstückig aus dem Versteifungselement 36 gebildet, was wiederum einstückig mit dem Endabschnitt 26 ausgebildet ist.

Somit sind alle Teile der Berstvorrichtung 30 einstückig mit dem Zellgehäuse 10 ausgebildet.

Nachfolgend wird noch ein Verfahren zum Herstellen des Zellgehäuses 10, wie es in den Figuren 1 bis 4 gezeigt ist, beschrieben.

Dabei wird in einem ersten Schritt eine flache Platte aus Flachmaterial bereitgestellt, die aus Eisen oder einem Material mit einer Eisenlegierung besteht.

In einem zweiten Schritt ist vorgesehen, dass eine Berstmembran 32 in den Anfangsabschnitt 24 eingebracht wird. An dem Endabschnitt 26 wird eine, im zusammengebauten Zellgehäuse der Berstmembran 32 gegenüberliegende Öffnung 34 ausgebildet, sodass die Berstmembran 32 im zusammengebauten Zustand, in einer Draufsicht betrachtet, innerhalb der Öffnung 34 angeordnet ist. Beim Einbringen der Öffnung 34 wird gleichzeitig das Versteifungselement 36 mit der Bersthilfe 48 und der Schneidgeometrie 50 aus dem Endabschnitt 26 gebildet.

Diese flache Platte wird in einem dritten Schritt umgeformt, sodass eine geschlossene umlaufende, rahmenartige Umfangswand 12 entsteht. Diese geschlossene Umfangswand 12 mit dem Überlappungsabschnitt 22 ist besonders gut in den Figuren 4a und 4b zu erkennen.

In Figur 4a stellt weist nur eine der Seiten 16, 18 des Zellgehäuses 10, nämlich eine kurze Seite 16 den Überlappungsabschnitt 22 auf, während sich in Figur 4b der Überlappungsabschnitt 22 teilweise auch über die lange Seite 18 erstreckt.

Diese Umfangswand 12 ist einstückig aus der Platte ausgebildet. Zum Umformen der Platte können verschiedene Methoden zum mechanischen Umformen von Metallen verwendet werden, wie Fließpressen, Strangpressen, Biegen oder Rollformen. Der Biegewinkel α beim Biegen der Platte beträgt dabei im Wesentlichen 90°. Insgesamt wird die Platte mindestens viermal gebogen, sodass mindestens vier Biegekanten 20 entstehen. Der Biegeradius r jeder Biegekante 20 liegt zwischen 0,2 mm und 10 mm. Die Platte wird so gebogen, dass der Anfangsabschnitt 24 und der Endabschnitt 26 der Umfangswand 12 in dem Überlappungsabschnitt 22 überlappen und so eine einseitige Versteifung des Zellgehäuses 10 erzielen. Dadurch wird eine Wandstärke w2 im Überlappungsabschnitt 22 erzielt, die doppelt so groß ist wie die Wandstärke w1 des restlichen Zellgehäuses 10.

In einem vierten Schritt werden der Anfangsabschnitt 24 und der Endabschnitt 26 zumindest teilweise im Überlappungsabschnitt 22 stoffschlüssig miteinander verbunden, um die Stabilität des Zellgehäuses 10 herzustellen. Dazu eignen sich insbesondere Laserschweißen, Rührreibschweißen oder ähnliche Schweißverfahren oder Lötverfahren. Das heißt, der Überlappungsabschnitt 22 weist Befestigungsstellen 28 auf, an denen Anfangsabschnitt 24 und Endabschnitt 26 miteinander verbunden sind, die entweder durch Durchschweißen von einer anliegenden Seite erreicht werden oder als Kehlnaht ausgebildet sind. Die Befestigungsstellen 28 können daher entweder punktförmig oder flächig ausgebildet sein.

Nachdem das Zellgehäuse 10 hergestellt wurde, kann im Inneren 14 des Zellgehäuses 10 ein Batteriezellkörper eingebracht werden, sodass eine Batterie mit einem Zellgehäuse 10 mit einer Berstvorrichtung 30 gebildet wird.

## Patentansprüche

1. Zellgehäuse (10) zur Aufnahme eines Batteriezellkörpers, mit einer geschlossenen, umlaufenden, rahmenartigen Umfangswand (12) aus einem Flachmaterial, wobei die Umfangswand (12) einstückig ausgebildet ist und einen Überlappungsabschnitt (22) aufweist, in dem sich ein Anfangsabschnitt (24) der Umfangswand (12) und ein Endabschnitt (26) der Umfangswand (12) überlappen und aneinander befestigt sind, wobei der Überlappungsabschnitt (22) eine Berstvorrichtung (30) mit einer Berstmembran (32) aufweist, wobei die Berstmembran (32) eine konvexe Seite (42) und eine konkave Seite (40) hat.

2. Zellgehäuse nach Anspruch 1, **dadurch gekennzeichnet, dass** die Berstmembran (32) einstückig mit dem Anfangsabschnitt (24), der mit einer Seite zu einem Inneren (14) des Zellgehäuses (10) zeigt, ausgebildet ist.

3. Zellgehäuse nach einem der Ansprüche 1 oder 2, **dadurch gekennzeichnet, dass** die konvexe Seite (42) der Berstmembran (32) in Richtung des Inneren (14) des Zellgehäuses (10) zeigt.

4. Zellgehäuse nach einem der vorhergehenden Ansprüche, **dadurch gekennzeichnet, dass** die Berstmembran (32) eine Schwächungszone (44) aufweist.

5. Zellgehäuse nach Anspruch 4, **dadurch gekennzeichnet, dass** die Schwächungszone (44) eine Vertiefung ist.

6. Zellgehäuse nach einem der vorhergehenden Ansprüche, **dadurch gekennzeichnet, dass** der Endabschnitt (26), der mit einer Seite zu einem Äußeren (38) des Zellgehäuses (10) zeigt, im Bereich der Berstvorrichtung (30) eine Öffnung (34) aufweist.

7. Zellgehäuse nach einem der vorhergehenden Ansprüche, **dadurch gekennzeichnet, dass** die Berstvorrichtung (30) im Endabschnitt (26) ein Versteifungselement (36) aufweist, das einstückig mit dem Endabschnitt (26) ausgebildet ist.

8. Zellgehäuse nach Anspruch 7, **dadurch gekennzeichnet, dass** das Versteifungselement (36) eine Bersthilfe (48) mit einer Schneidgeometrie (50) aufweist, die der Berstmembran (32) zugeordnet ist.

9. Zellgehäuse nach einem der Ansprüche 7 oder 8, **dadurch gekennzeichnet, dass** das Versteifungselement (36) ein Steg ist, der die Öffnung (34) überspannt und von der Berstmembran (32) beabstandet ist.
